Europäisches Patentamt

European Patent Office

Office européen des brevets

(11) Veröffentlichungsnummer: **0 267 478 B1**

# EUROPÄISCHE PATENTSCHRIFT

(45) Veröffentlichungstag der Patentschrift: **18.12.91**

(51) Int. Cl.⁵: **F01D 25/12**, F02C 7/18

(21) Anmeldenummer: **87115640.2**

(22) Anmeldetag: **24.10.87**

(54) **Gasturbinenstrahltriebwerk mit einem Hochdruckverdichter.**

(30) Priorität: **14.11.86 DE 3638960**
**14.11.86 DE 3638961**

(43) Veröffentlichungstag der Anmeldung:
**18.05.88 Patentblatt 88/20**

(45) Bekanntmachung des Hinweises auf die
Patenterteilung:
**18.12.91 Patentblatt 91/51**

(84) Benannte Vertragsstaaten:
**AT FR GB IT NL**

(56) Entgegenhaltungen:
**FR-A- 1 207 772          FR-A- 2 093 924**
**FR-A- 2 101 178          FR-A- 2 135 319**
**FR-A- 2 164 718          US-A- 2 831 653**

**CFM INTERNATIONAL - PROSPEKT**
**2074/11/84, SNECMA SCN**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Zähring, Gerhard
Brückenweg 5b
W-8031 Wörthsee(DE)**
Erfinder: **Wohlmuth, Josef
Rainerstrasse 37
W-8039 Puchheim Bhf.(DE)**
Erfinder: **Schmuhl, Hans-Jürgen
Brückenweg 5a
W-8031 Wörthsee(DE)**

## Beschreibung

Die Erfindung betrifft ein Gasturbinenstrahltriebwerk mit einem Hochdruckverdichter, dessen Rotor im wesentlichen als Hohlwelle ausgeführt ist, wobei die Hohlwelle hinter der letzten Laufradscheibe des Hochdruckverdichters einen konisch sich verjüngenden Abschnitt aufweist und mit einer Anordnung zur Kühlung des Hochdruckverdichters durch Luftzufuhr vom Niederdruckverdichter.

Aus dem Prospekt CFM 2074/11/84 der Firma SNECMA-SCN, welcher einen Axialschnitt eines Gasturbinenstrahltriebwerks zeigt, sind Hochdruckverdichter dieser Art bekannt, wobei die Kühlung des Verdichters durch einen vom Niederdruckverdichter abgezweigten und im Spalt zwischen den Hochdruckverdichterscheiben und der Niederdruckverdichter-Turbinenwelle entlangführenden Luftstrom erfolgt, welcher stromabwärts eine Turbinenlagerkammer kühlt. Dabei ist die Kühlwirkung jedoch für die radial äußeren Bereiche der Verdichterscheiben gering. Dadurch kommt es insbesondere in den Scheiben der letzten Verdichterstufen moderner hochverdichtender Triebwerke infolge eines großen radialen Temperaturgradienten zu großen Bauteilspannungen, die dadurch entstehen, daß die Scheiben außen von dem warmen Verdichterhauptstrom und innen von der Kühlluft umspült werden.

Durch die hierdurch und durch Fliehkräfte bedingten Spannungen werden die Verdichterscheiben stark beansprucht, weshalb man die letzten Stufen des Hochdruckverdichters aus hochwarmfesten Nickellegierungen herstellt. Dies hat jedoch den Nachteil, daß wegen der großen Dichte der Nickellegierungen der Verdichter hohes Gewicht hat.

Aufgabe der Erfindung ist es, eine Vorrichtung zu schaffen, welche die Kühlung auch der äußeren Bereiche der thermisch hochbeanspruchten Verdichterbauteile ermöglicht, so daß deren thermische Spannungen vermindert werden und die Bauteile aus Leichtmetallwerkstoffen hergestellt werden können.

Die gestellte Aufgabe wird erfindungsgemäß mit den Merkmalen der Patentansprüche 1 und 7 gelöst.

Bei einer Lösung mit dem Merkmal nach Patentanspruch 1 besteht ein Vorteil des erfindungsgemäßen Hitzeschildes darin, daß die letzte Verdichterscheibe und die konische Hohlwelle von einer zu starken Aufheizung durch die vorbeiströmenden heißen Verdichtergase bewahrt werden. Zur Kühlung dieser Bauteile wird ferner ein zirkulierender Kühlluftstrom durch den ringförmigen Hohlraum zwischen Hohlwelle und Hitzeschild geführt, welcher aufgrund des durch die Radiendifferenz zwischen Zu- und Austrittsöffnungen hervorgerufenen Fliehkraftfeldes nach radial außen und anschließend in den Raum zwischen den zwei letzten Verdicherscheiben gefördert wird. Eine vorteilhafte Ausgestaltung besteht darin, daß das Hitzeschild nach innen gekrümmt ausgeführt ist, so daß eine Abstützung des Hitzeschildes gegenüber der Fliehkraftbeanspruchung möglich ist. Da im ringförmigen Hohlraum ein geringerer Druck herrscht als radial außerhalb des Hitzeschildes, wirkt diese Druckdifferenz zusätzlich der Fliehkraftbeanspruchung entgegen.

Eine weitere vorteilhafte Ausführungsform der Erfindung sieht vor, daß auf der äußeren Seite des konisch geformten Teils der Hohlwelle mehrere in axialer Richtung verlaufende, über dem Umfang verteilte schaufelartige Rippen angebracht sind. Dadurch wird die Zirkulation der Kühlluft verstärkt. Außerdem erhöht sich die Kühlwirkung durch die vergrößerte Oberfläche der Hohlwelle.

Zweckmäßigerweise sind die Rippen in Umfangsrichtung gekrümmt, um die Förderwirkung zu erhöhen, so daß die Luft mit ausreichendem Überdruck den Hohlraum verlassen kann. Eine andere vorteilhafte Ausgestaltung besteht darin, daß nur ein nahe der Rotorscheibe befindlicher Abschnitt der Hohlwelle vom ringförmigen Hitzeschild umgeben ist. Hierdurch ließe sich der Temperaturgradient über dieser Rotorscheibe vermindern und das Hitzeschild könnte mit einer Gleitfläche für eine am Brennkammergehäuse befestigte Umfangsdichtung versehen werden. So würde verhindert, daß heiße Gase in den Hohlraum zwischen Hohlwelle und Brennkammergehäuse eindringen und in diesem Bereich die Temperatur unzulässig ansteigt.

Im weiteren bezieht sich die Erfindung auf ein Gasturbinenstrahltriebwerk mit einem Hochdruckverdichter, dessen Rotor im wesentlichen als Hohlwelle ausgeführt ist, wobei die Hohlwelle hinter der letzten Laufradscheibe des Hochdruckverdichters einen konisch sich verjüngenden Abschnitt aufweist, und mit einer Anordnung zur Kühlung des Hochdruckverdichters durch Luftzufuhr vom Niederdruckverdichter, wobei die letzte Laufradscheibe nahe dem äußeren Rand mit über dem Umfang verteilten axialen Kühlluftbohrungen versehen ist und die Hohlwelle auf ihrer Innenseite Kühlrippen aufweist.

Ein Gasturbinenstrahltriebwerk dieser Bauart ist aus der FR-A- 2 164 718 bekannt. Bei diesem vorbekannten Gasturbinenstrahltriebwerk verlaufen die Kühlrippen auf der Innenseite der Hohlwelle in Umfangsrichtung, während ein Kühlluftstrom in Axialrichtung über sie hinweg streicht. Insoweit dienen die Kühlrippen lediglich der konvektiven Wärmeübertragung ohne den Kühlluftstrom selbst merklich zu beeinflussen.

Gegenüber dieser vorbekannten Konstruktion soll eine noch effektivere und insbesondere geringere Strömungsverluste verursachende Kühlung auch der äußeren Bereiche der thermisch hochbeanspruchten Verdichterbauteile ermöglicht werden.

Erfindungsgemäß wird diese Aufgabe dadurch gelöst, daß bei einer gattungsgemäßen Vorrichtung die Kühlrippen sich entlang des konisch sich verjüngenden Abschnittes der Hohlwelle erstrecken und über dem Umfang verteilt angeordnet sind.

Durch die erfindungsgemäße Anordnung der Kühlrippen wirken diese bei Rotation der Hohlwelle wie Gebläseschaufeln und fördern dadurch einen Teil der in Achsnähe anströmenden Kühlluft zum radial äußeren Bereich der letzten Laufradscheibe, wo diese durch die axialen Bohrungen in den Hohlraum zwischen den beiden hintersten Laufradscheiben tritt. Weiter radial innen vereinigt sich dieser Kühlluftstrom mit frischer vom Niederdruckverdichter anströmender Kühlluft und bildet so eine zirkulierende Strömung. Auf diese Weise wird eine erheblich verbesserte Kühlung von Hohlwelle und hinterster Laufradscheibe erreicht, wodurch die Verwendung von Leichtmetallwerkstoffen wie Titan für diese Bauteile möglich wird. Aufgrund der hierdurch erzielbaren Gewichtseinsparung ergeben sich verschiedene Vorteile, wie Verringerung von Kräften und Momenten und Treibstoffeinsparung.

Die der Kühlluftförderung dienenden Rippen vergrößern außerdem vorteilhafterweise die Oberfläche der Hohlwelle und verbessert so deren Wärmeabfuhr.

Vorzugsweise sind die schaufelartigen Rippen in Umfangsrichtung gekrümmt, um die Förderwirkung zu erhöhen, so daß die Luft mit ausreichendem Überdruck durch die Bohrungen der hintersten Laufradscheibe strömen kann.

In einer weiteren Ausführung können die Bohrungen gegenüber der Laufradscheibenachse um einen Winkel in Umfangsrichtung angestellt sein, um auf diese Weise eine bessere Förderwirkung zu erreichen.

Am Beispiel der in den Zeichnungen gezeigten Ausführungsformen wird die Erfindung nun weiter beschrieben. Dabei zeigt:

Fig. 1 ein Axialschnitt des hinteren Hochdruckverdichterteils und der zur Hochdruckturbine führenden Hohlwelle mit dem erfindungsgemäßen Hitzeschild,

Fig. 2 die gleiche Anordnung mit erfindungsgemäßer Rippen,

Fig. 3 eine schematische axiale Ansicht der konischen Hohlwelle mit Rippen,

Fig. 4 die gleiche Anordnung mit dem auf den vorderen Hohlwellenbereichen beschränkten Hitzeschild,

Fig. 5 einen Axialschnitt durch den hinteren Teil des Hochdruckverdichters und des daran anschließenden, konisch sich verjüngenden Hohlwellenabschnitts,

Fig. 6 eine schematische, axiale Ansicht des konischen Hohlwellenabschnitts mit Rippen.

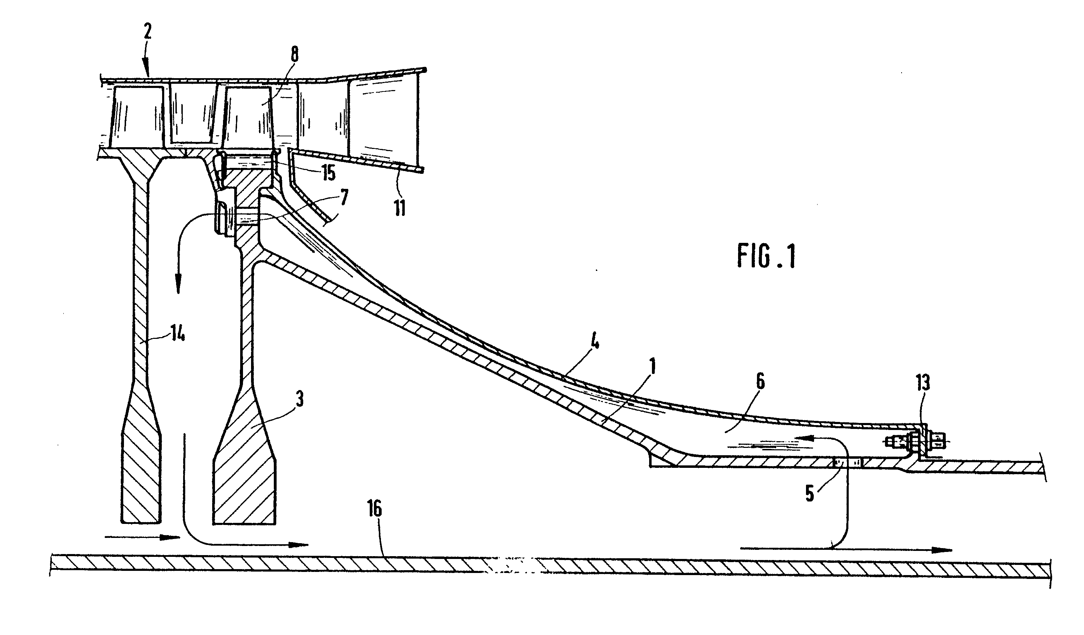

Gemäß Fig. 1 ist an der letzten Rotorscheibe 3 des Hochdruckverdichters 2 eine zunächst konisch sich verjüngende , dann zylindrisch verlaufende Hohlwelle 1 befestigt, welche stromabwärts mit einer nicht dargestellten Hochdruckturbine gekoppelt ist. Hinter den Verdichterschaufeln 8 der hintersten Rotorscheibe 3 ist ein zu einer nicht dargestellten Brennkammer gehöriges Innengehäuse 11 angeordnet. Radial innen befindet sich eine Welle 16, die einen nicht dargestellten Niederdruckverdichter mit einer ebenfalls nicht dargestellten Niederdruckturbine koppelt. Ein Hitzeschild 4 ist am radial äußeren Rand der Rotorscheibe 3 so befestigt, daß es bis an den Fußbereich der Verdichterschaufeln 8 heranreicht und auf diese Weise die Rotorscheibe 3 von hinten gänzlich gegenüber dem vorbeifließenden Heißgasstrom des Hochdruckverdichters 2 abschirmt.

Stromabwärts ist das Hitzeschild 4 am zylindrischen Teil der Hohlwelle 1 befestigt. In der Nähe der hinteren Hitzeschildbefestigung 13 ist die Hohlwelle 1 mit über den Umfang verteilten Bohrungen 5 versehen, die dem Eintritt der Kühlluft in den ringförmigen Hohlraum 6 dienen. Die hinterste Rotorscheibe 3 ist nahe dem äußeren Rand mit über den Umfang verteilten axialen Bohrungen 7 versehen, welche den Hohlraum 6 mit dem Raum zwischen den letzten zwei Rotorscheiben 3, 14 verbinden.

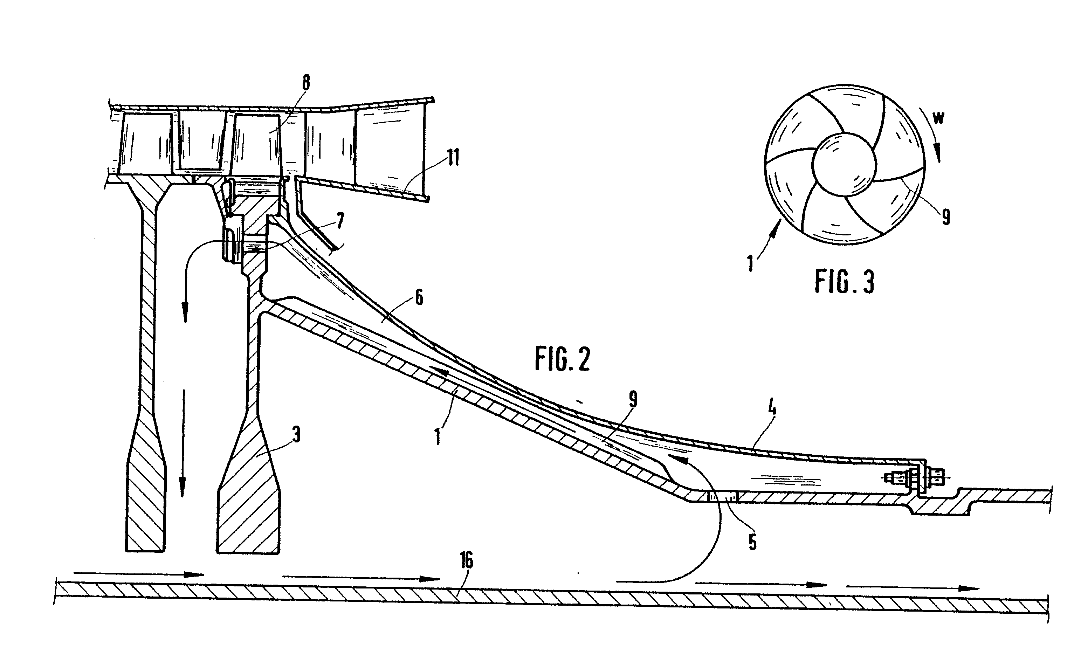

Wie anhand Fig. 2 verdeutlicht, kann der konisch sich verjüngende Teil der Hohlwelle 1 außen mit schaufelartigen Rippen 9 versehen sein. Dabei können, wie in Fig. 3 veranschaulicht, die Rippen 9 in Umfangsrichtung gekrümmt sein.

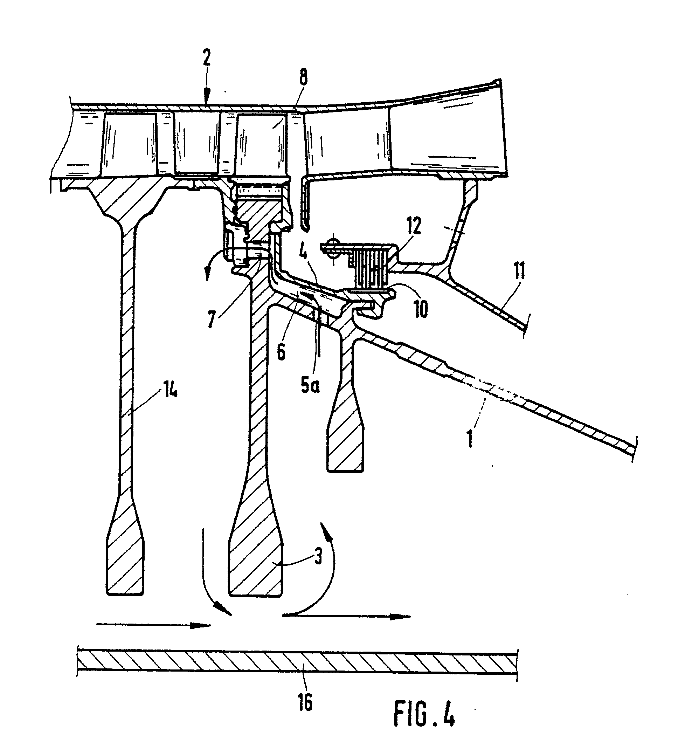

Fig. 4 zeigt eine Ausführungsform, bei der das Hitzeschild 4 nur den vorderen Teil der Hohlwelle 1 und den äußeren Teil der Rotorscheibe 3 abschirmt. Dabei ist auf dem Hitzeschild 4 eine Gleitfläche 10 für eine am Innengehäuse 11 befestigte Umfangsdichtung 12 vorgesehen.

Die Hohlwelle 1 ist mit über dem Umfang verteilten Bohrungen 5a versehen, die den zwischen Hohlwelle 1 und Hitzeschild 4 liegenden ringförmigen Hohlraum 6 mit dem innerhalb der Hohlwelle 1 liegenden Raum verbindet. Über axiale Bohrungen 7 ist der Hohlraum 6 mit dem Raum zwischen den Rotorscheiben 3, 14 verbunden.

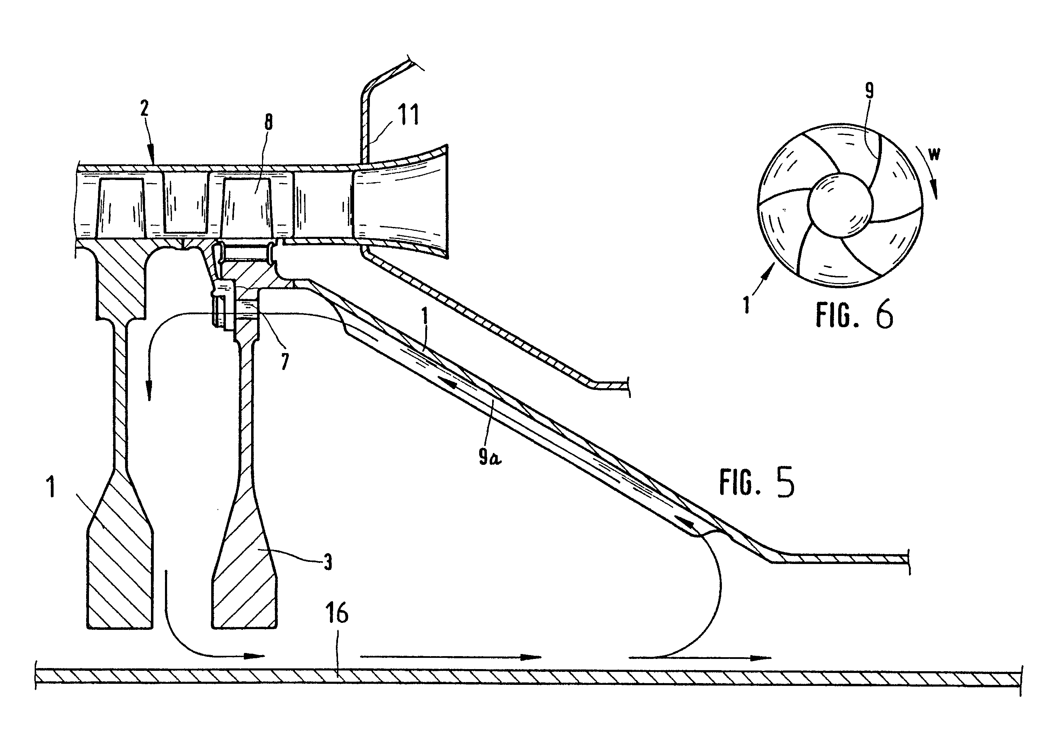

Wie Figur 5 zeigt, ist in einer alternativen Ausführungsform der Erfindung eine Hohlwelle 1 an der letzten Laufradscheibe 3 eines Hochdruckverdichters 2 befestigt. Stromabwärts ist die Hohlwelle 1 mit dem Rotor einer nicht dargestellten Hochdruckturbine verbunden. Radial innen verläuft die Welle 16, welche den ebenfalls nicht gezeigten Niederdruckverdichter mit der Niederdruckturbine koppelt. Hinter dem Verdichterschaufeln 8 der hintersten Rotorscheibe 3 ist ein zur nicht dargestellten Brennkammer gehöriges Innengehäuse 11 angeordnet. Der konisch sich verjüngende Abschnitt der Hohlwelle 1 ist an der Innenseite mit mehreren, über dem Umfang verteilten schaufelartigen Rippen 9a versehen, dabei sind die Rippen 9a, wie Figur 6 zeigt, in Umfangsrichtung gekrümmt ausgeführt. Die Rotorscheibe 3 ist an ihrem radial äußeren Teil nahe der Befestigung der Hohlwelle 1 mit über dem Umfang verteilten axialen Bohrungen 7 versehen.

Die vom nicht dargestellten Niederdruckverdichter abgezapfte Kühlluft, welche in Nabennähe am Hochdruckverdichter 2 vorbeiströmt, gelangt hinter diesem zum Teil in den Wirkungsbereich der Rippen 9a. Aufgrund der Rotation von Hohlwelle 1 und Rippen 9a wird die Kühlluft ähnlich dem Wirkprinzip eines Radialverdichters entlang der Hohlwelle 1 nach radial außen gefördert.

Durch die in der Laufradscheibe 3 befindlichen Bohrungen 7 wird die Kühlluft in den Hohlraum zwischen den letzten zwei Rotorscheiben 3 und 14 gefördert und strömt unter Kühlung beider Scheiben nach radial innen, um sich mit der frischen Kühlluft vom Niederdruckverdichter zu vermischen, so daß eine zirkulierende Luftströmung entsteht. Ein Teil der Luft gelangt stromabwärts erneut in den so zirkulierenden Kreislauf, der andere Teil strömt in axialer Richtung weiter in Richtung einer nicht dargestellten Turbinen-Lagerkammer.

**Patentansprüche**

1. Gasturbinenstrahltriebwerk mit einem Hochdruckverdichter, dessen Rotor im wesentlichen als Hohlwelle ausgeführt ist, wobei die Hohlwelle hinter der letzten Laufradscheibe des Hochdruckverdichters einen konisch sich verjüngenden Abschnitt aufweist, und mit einer Anordnung zur Kühlung des Hochdruckverdichters durch Luftzufuhr vom Niederdruckverdichter, gekennzeichnet durch folgende Merkmale:

   a) Ein konisches Hitzeschild (4) ist radial außerhalb des konisch sich verjüngenden Abschnitts der Hohlwelle (1) an der Rotorscheibe (3) der letzten Verdichterstufe und stromabwärts an der Hohlwelle (1) befestigt;
   b) die Hohlwelle (1) ist nahe der Stromabwärts liegenden Hitzeschildbefestigung (13) mit über dem Umfang verteilten radialen Bohrungen (5) versehen, durch welche die vom Niederdruckverdichter kommende Kühlluft in den ringförmigen Hohlraum (6) einströmen kann;
   c) die Rotorscheibe (3) der letzten Hochdruckverdichterstufe ist nahe dem äußeren Rand mit axialen Bohrungen (7) versehen, welche von der im Hohlraum (6) befindlichen Kühlluft durchströmt werden;
   d) das ringförmige Hitzeschild (4) erstreckt sich radial nach außen bis zu den Füßen der Schaufeln (8) und überdeckt den gesamten Schaufelfußbereich (15) der hintersten Verdichterschaufeln (8).

2. Gasturbinenstrahltriebwerk nach Anspruch 1, dadurch gekennzeichnet, daß das Hitzeschild (4) nach innen gekrümmt ist.

3. Gasturbinenstrahltriebwerk nach Anspruch 1 und 2, dadurch gekennzeichnet, daß auf der äußeren Seite des konisch geformten Teils der Hohlwelle (1) mehrere in axialer Richtung verlaufende, über den Umfang verteilte schaufelartige Rippen (9) angebracht sind.

4. Gasturbinenstrahltriebwerk nach Anspruch 3, dadurch gekennzeichnet, daß die Rippen (9) in Umfangsrichtung gekrümmt sind.

5. Gasturbinenstrahltriebwerk nach Anspruch 1 bis 2, dadurch gekennzeichnet, daß nur ein nahe der Rotorscheibe (3) befindlicher Abschnitt der Hohlwelle (1) vom ringförmigen Hitzeschild (4) umgeben ist.

6. Gasturbinenstrahltriebwerk nach Anspruch 5, dadurch gekennzeichnet, daß das Hitzeschild (4) mit einer Gleitfläche (10) versehen ist, auf der eine am Innengehäuse (11) befestigte Umfangsdichtung (12) läuft.

7. Gasturbinenstrahltriebwerk mit einem Hochdruckverdichter, dessen Rotor im wesentlichen als Hohlwelle ausgeführt ist, wobei die Hohlwelle hinter der letzten Laufradscheibe des Hochdruckverdichters einen konisch sich verjüngenden Abschnitt aufweist, und mit einer Anordnung zur Kühlung des Hochdruckverdichters durch Luftzufuhr vom Niederdruckverdichter, wobei die letzte Laufradscheibe nahe dem äußeren Rand mit über dem Umfang verteilten axialen Kühlluftbohrungen versehen ist und die Hohlwelle auf ihrer Innenseite Rippen aufweist, dadurch gekennzeichnet, daß die Rippen (9a) schaufelartig ausgeführt sind zur Förderung von innen anströmender Kühlluft in Richtung der konischen Erweiterung, sich entlang des konisch sich verjüngenden Abschnittes der Hohlwelle (1) erstrecken und über dem Umfang verteilt angeordnet sind.

8. Gasturbinenstrahltriebwerk nach Anspruch 7, dadurch gekennzeichnet, daß die Rippen (9) an der Innenwand des konischen Abschnitts der Hohlwelle (1) in Umfangsrichtung gekrümmt sind.

9. Gaturbinenstrahltriebwerk nach Anspruch 7 oder 8, dadurch gekennzeichnet, daß die Achsen der Bohrungen (7) gegenüber der Achse der Laufradscheibe (3) um einen Winkel geneigt sind.

## Claims

1. A gas turbine jet propulsion unit with a high pressure compressor, the rotor of which is constructed substantially as a hollow shaft, following the final rotor disc of the high pressure compressor, a conically tapering portion, and comprising an arrangement for cooling the high pressure compressor by supplying air from the low pressure compressor, characterised by the following features:

   a) a conical heat shield (4) is mounted on the hollow shaft (1) radially outside the conically tapering portion of the hollow shaft (1) on the rotor disc (3) of the final compressor stage and on the downstream side;
   b) the hollow shaft (1) is provided, close to the downstream heat shield mounting (13) with radial bores (5) distributed over the periphery and through which cooling air from the low pressure compressor can flow into the annular cavity (6);
   c) the rotor disc (3) of the final high pressure compressor stage is, close to the outer edge, provided with axial bores (7) through which cooling air in the cavity (6) is able to pass;
   d) the annular heat shield (4) extends radially outwardly as far as the roots of the blades (8) and masks the entire blade root area (15) of the rearmost compressor blades (8).

2. A gas turbine jet propulsion unit according to Claim 1, characterised in that the heat shield (4) is inwardly curved.

3. A gas turbine jet propulsion unit according to Claim 1 and 2, characterised in that provided on the outside of the conically shaped part of the hollow shaft (1) are a plurality of axially extending blade-like fins (9) which are distributed over the periphery.

4. A gas turbine jet propulsion unit according to Claim 3, characterised in that the fins (9) are curved in a peripheral direction.

5. A gas turbine jet propulsion unit according to Claim 1 to 2, characterised in that only a portion of the hollow shaft (1) which is disposed close to the rotor disc (3) is enclosed by the annular heat shield (4).

6. A gas turbine jet propulsion unit according to Claim 5, characterised in that the heat shield (4) is provided with a sliding surface (10) on which runs a peripheral seal (12) mounted on the inner housing (11).

7. A gas turbine jet propulsion unit with a high pressure compressor the rotor of which is constructed substantially as a hollow shaft, following the final rotor disc of the high pressure compressor, a conically tapering portion, and comprising an arrangement for cooling the high pressure compressor by supplying air from the low pressure compressor, the final rotor disc being provided, close to its outer edge, with axial cooling air ports distributed over the periphery, the hollow shaft comprising fins on its inside face, characterised in that the fins (9a) are blade-like to convey inwardly incident cooling air in the direction of the conical widened out part, extend along the conically tapering portion of the hollow shaft (1) and are distributed over the periphery.

8. A gas turbine jet propulsion unit according to Claim 7, characterised in that the fins (9) on the inside wall of the conical portion of the hollow shaft (1) are curved in a peripheral direction.

9. A gas turbine jet propulsion unit according to Claim 7 or 8, characterised in that the axes of the ports (7) are inclined at an angle to the axis of the rotor disc (3).

## Revendications

1. Réacteur à turbine à gaz comportant un compresseur à haute pression, dont le rotor est essentiellement réalisé sous la forme d'un arbre creux, cet arbre creux comprenant à l'arrière du dernier disque de rotor du compresseur à haute pression, un tronçon conique qui se rétrécit, et comportant également un système de refroidissement du compresseur à haute pression par amenée d'air du compresseur à basse pression, caractérisé par les particularités suivantes:

   a) un bouclier thermique (4) est fixé, radialement à l'extérieur du tronçon conique qui se rétrécit, de l'arbre creux (1), sur le disque de rotor (3) du dernier étage du compresseur, et en aval, sur l'arbre creux (1);

b) l'arbre creux (1) est pourvu à proximité de la fixation de bouclier thermique (13) située en aval, de trous (5) d'orientation radiale, répartis sur la périphérie et au travers desquels l'air de refroidissement en provenance du compresseur à basse pression, peut s'écouler vers l'intérieur de l'espace creux annulaire (6);

c) le disque de rotor (3) du dernier étage du compresseur à haute pression, est pourvu à proximité du bord extérieur, de trous (7) d'orientation axiale traversés par l'écoulement de l'air de refroidissement se trouvant dans l'espace creux (6);

d) le bouclier thermique (4) de forme annulaire s'étend radialement vers l'extérieur jusqu'aux pieds des aubes (8), et recouvre en totalité la zone du pied d'aube (15) des aubes (8) de compresseur situées les plus à l'arrière.

2. Réacteur à turbine à gaz selon la revendication 1, caractérisé en ce que le bouclier thermique (4) est courbé vers l'intérieur.

3. Réacteur à turbine à gaz selon les revendications 1 et 2, caractérisé en ce que sur le côté extérieur de la partie de forme conique de l'arbre creux (1), sont disposées plusieurs nervures (9) en forme d'aubes s'étendant en direction axiale et réparties sur la périphérie.

4. Réacteur à turbine à gaz selon la revendication 3, caractérisé en ce que les nervures (9) sont courbées en direction périphérique.

5. Réacteur à turbine à gaz selon les revendications 1 à 2, caractérisé en ce que seul un tronçon de l'arbre creux (1), proche du disque de rotor (3), est entouré par le bouclier thermique (4).

6. Réacteur à turbine à gaz selon la revendication 5, caractérisé en ce que le bouclier thermique (4) est muni d'une surface de glissement (10) sur laquelle frotte un joint d'étanchéité périphérique (12) fixé sur le carter intérieur (11).

7. Réacteur à turbine à gaz comportant un compresseur à haute pression, dont le rotor est essentiellement réalisé sous la forme d'un arbre creux, cet arbre creux comprenant à l'arrière du dernier disque de rotor du compresseur à haute pression, un tronçon conique qui se rétrécit, et comportant également un système de refroidissement du compresseur à haute pression par amenée d'air du compresseur à basse pression, le dernier disque de rotor étant pourvu, à proximité du bord extérieur, de trous d'air de refroidissement d'orientation axiale et répartis sur la périphérie, et l'arbre creux présentant sur son côté intérieur des nervures de refroidissement, caractérisé en ce que les nervures (9a) sont réalisées sous la forme d'aubes pour véhiculer de l'air de refroidissement affluant de l'intérieur, en direction de l'évasement conique, s'étendent le long du tronçon conique qui se rétrécit, de l'arbre creux (1, et qui sont disposées de manière répartie sur la périphérie.

8. Réacteur à turbine à gaz selon la revendication 7, caractérisé en ce que les nervures (9a) sur la paroi intérieure du tronçon conique de l'arbre creux (1, sont courbées en direction périphérique.

9. Réacteur à turbine à gaz selon la revendication 7, caractérisé en ce que les axes des trous (7) sont inclinés d'un certain angle par rapport à l'axe du disque de rotor (3).

FIG.1

EP 0 267 478 B1

FIG.3

FIG.2

FIG.4

FIG. 6

FIG. 5